# EUROPÄISCHE PATENTSCHRIFT

(11) **EP 1 998 606 B1**
(45) Veröffentlichungstag und Bekanntmachung des Hinweises auf die Patenterteilung: **02.05.2012**
(21) Anmeldenummer: 07723169.4
(22) Anmeldetag: 10.03.2007
(51) Int. Cl.: A01G 9/12

(54) **BEFESTIGUNGSMITTEL ZUR SICHERUNG EINES BAUMBALLENS GEGEN KIPPEN**
FASTENING MEANS FOR SECURING A TREE-ROOT BALL AGAINST TILTING
MOYEN DE FIXATION DESTINÉ À PROTÉGER UN GROUPE D'ARBRES CONTRE LES MÉGOTS DE CIGARETTE

(30) Priorität: 24.03.2006 DE 102006014541
(43) Veröffentlichungstag der Anmeldung: 10.12.2008
(73) Patentinhaber: Wessolly, Lothar, 70195 Stuttgart (DE)
(72) Erfinder: Wessolly, Lothar, 70195 Stuttgart (DE)
(74) Vertreter: Dreiss, Uwe
(86) Internationale Anmeldenummer: PCT/EP2007/002117
(87) Internationale Veröffentlichungsnummer: WO 2007/110146

(56) Entgegenhaltungen:
- EP-A1- 0 465 385
- FR-A- 2 683 250
- JP-A- 9 327 241
- US-A- 4 762 454
- US-A- 6 065 243
- US-A1- 2002 066 226

## Beschreibung

Die Erfindung betrifft ein Verfahren zur Sicherung eines Baumballens gegen Kippen beim Einpflanzen des Baumballens in ein umgebendes Erdreich sowie ein Befestigungsmittel zur Sicherung eines Baumballens. Derartige Sicherungen sind nach dem Einpflanzen notwendig, bis der Baum so weit eingewachsen ist, dass sich ein fest im Boden verankertes Wurzelwerk gebildet wird, das hinreichende Sicherung gegen Kippen bietet.

Das Problem der Sicherung gegen Kippen bei frisch eingepflanzten Baumballen ist insbesondere dadurch gegeben, dass Baumballen rund sind. Sie werden dann in eine im Erdreich vorbereitete Grube gesenkt; das Erdreich wird um den Baumballen herum aufgefüllt. Der runde Baumballen sitzt im Erdreich wie eine Kugel in einer Pfanne und ist besonders anfällig gegen Kippen, insbesondere bei Windstößen usw. Seither verwendet man zur Sicherung entweder eine Abspannung mit Seilen oder im Boden abgestützte Aufbauten, die die Bewegungsmöglichkeit des Baumes in einer Höhe von 1 - 2 m über dem Boden begrenzen. Es sind auch Unterflurverankerungen bekannt. Sie pressen den Baumballen durch Seile oder Holzkonstruktionen nach unten.

Aus der US 6,065,243 ist ein Befestigungsmittel zur Sicherung eines Baumballens gegen Kippen mit einem Verankerungsteil bekannt, das bei Einpflanzung des Baumballens in diesen und in das diesen umgebende Erdreich einsteckbar ist. Dabei werden zwei oder auch mehrere gabelartige Vorrichtungen verwendet, bei denen zwei von oben nach unten in das Erdreich einsteckbare Zinken durch einen Querbügel miteinander verbunden sind, wobei mehrere solcher Vorrichtungen reihum mit den inneren Zinken von oben in den Baumballen und mit den äußeren Zinken von oben in das umgebende Erdreich eingesteckt werden. Das Einbringen dieser Zinken in den Baumballen einerseits und das umgebende Erdreich andererseits erfordert einen beachtlichen Arbeitsaufwand. Ferner besteht die Gefahr, dass man beim Einstecken des inneren Zinkens von oben in Nähe des Stamms wichtige Wurzelbereiche verletzt. Ein solcher Baumballen ist meist zum Transport mit einem Netz umgeben, das das Wurzelwerk und das unmittelbar damit in Verbindung stehende Erdreich umfasst. Das Einstecken mehrerer derartiger Zinken bringt daher die Gefahr mit sich, dass ein solches Netz zerstört wird.

Erfindungsgemäß wird vorgeschlagen, dass ein Verankerungsteil verwendet wird, dessen oberer Bereich von unten in den Baumballen eingesteckt wird und dessen unterer Bereich in das Erdreich eingesteckt wird.

Weiterhin besteht die der Erfindung zugrunde liegende Aufgabe darin, ein Befestigungsmittel zu schaffen, das sehr viel einfacher ist.

Diese Aufgabe wird gelöst durch ein Befestigungsmittel mit den Merkmalen des Patentanspruchs 2.

Vorteilhafte Weiterbildungen sind in den Unteransprüchen 3 bis 9 definiert.

Der Vorteil eines solchen Mittels ist es, dass es von unten in den Baumballen so eingesteckt werden kann, dass es einerseits in diesem, andererseits auch in dem den Baumballen umgebenden Erdreich fest verankert ist, so dass sich eine wirksame, wenngleich elastische und daher besonders vorteilhafte Verankerung des Baumballens im umgebenden Erdreich ergibt.

Sie wirkt wie eine Pfahlwurzel oder ein Zapfen.

Das Verankerungsteil muss nicht entfernt werden. Es kann aus einem Material bestehen, das im Lauf einiger Jahre verrottet oder verrostet.

Ein Ausführungsbeispiel der Erfindung und ihrer vorteilhaften Weiterbildungen wird im Folgenden unter Bezugnahme auf die beigefügten Zeichnungen näher beschrieben. Es stellen dar:
- Figur 1: eine Ansicht eines Baumballens mit einem Verankerungsteil;
- Figur 2: eine Seitenansicht des Verankerungsteils;
- Figur 2a: den Bereich IIa aus Figur 2;
- Figur 3: eine Draufsicht auf den Verankerungsteil (in Richtung der Pfeile III-III in Figur 2).

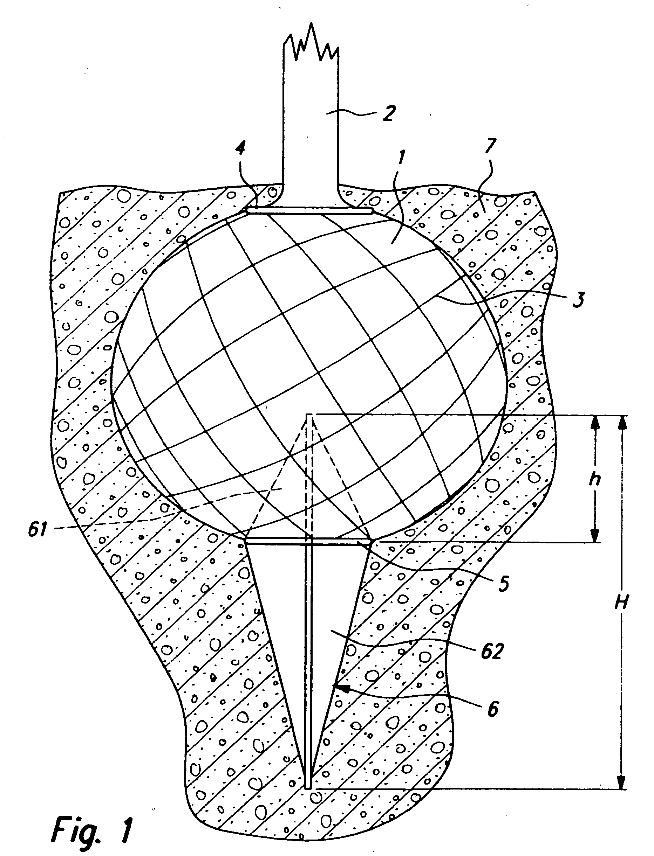

Figur 1 zeigt einen Baumballen 1 am Ende eines Baumstammes 2. Der Baumballen 1 ist mit einem Drahtgeflecht 3 umgeben. Das Drahtgeflecht 3 ist oben und unten durch Ringe 4 beziehungsweise 5 eingefasst. Durch den oberen Ring 4 erstreckt sich der Baumstamm 2 hindurch. Durch den unteren Ring 5 hindurch erstreckt sich der obere Bereich 61 eines Verankerungsteils 6 hindurch, dessen unterer Bereich 62 im Boden 7 des umgebenden Erdreichs steckt. Dieses Verankerungsteil 6 dient während des Einwachsens des Baumballens 1 in das umgebende Erdreich 7 dazu, den Baumballen 1 gegen ein Kippen zu sichern.

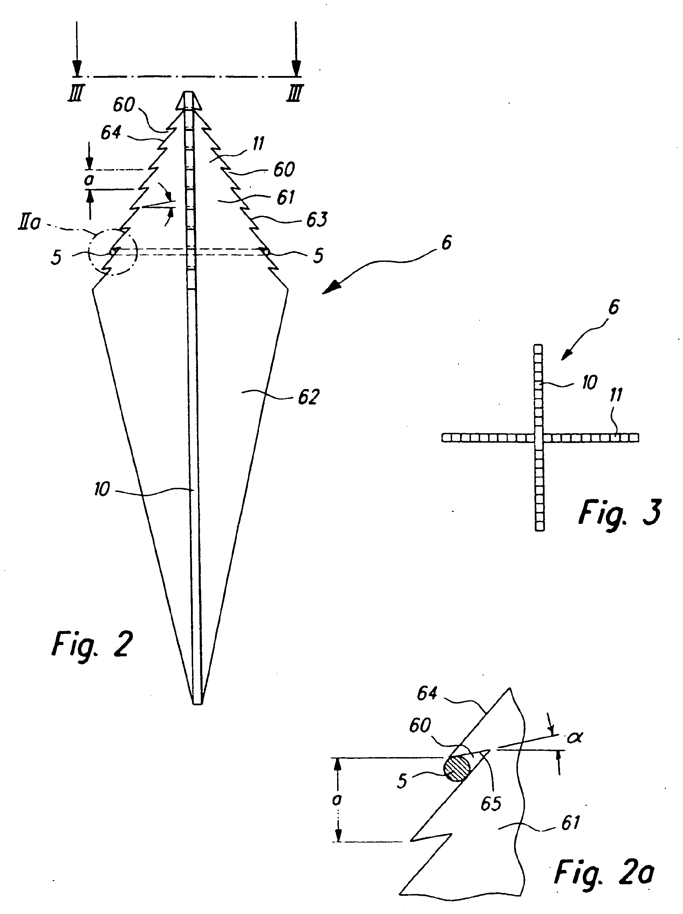

Wie aus Figur 3 ersichtlich, besteht das Verankerungsteil 6 im Wesentlichen aus zwei Platten 10 und 11, die so ineinander gesteckt sind, dass sie zueinander einen im Wesentlichen rechten Winkel bilden. Dies kann durch geeignete Schlitze erfolgen, die so angeordnet sind, dass die Platten ineinander gesteckt und verschweißt werden können, oder durch Verschweißen von Plattenteilen geeigneter Größe. Die Bereiche 61 und 62 sind dreieckförmig ausgebildet. Der obere Bereich 61 hat die Höhe h, die etwa ein Drittel der Gesamthöhe H ist.

Der obere Bereich 61 ist an den beiden sich zur Spitze hin erstreckenden Seitenkanten 63 und 64 sägezahnförmig ausgebildet. Die Sägezahneinschnitte 60 haben eine obere Kante 65, die gegenüber der Waagerechten nach oben einen Winkel α von einigen Grad, vorzugsweise zwischen 2° und 10° hat, so dass der Ring 5, der durch einen solchen Sägezahn gehalten wird, nicht nach oben herausrutscht. Die vertikale Erstreckung (a; vergleiche Figur 2, 3) eines Sägezahnabschnitts beträgt 0,5 - 2 cm.

Man kann also den oberen Teil 61 des Verankerungsteils 6 von unten so weit in den Ring hineinschieben, dass dieser - bei geringfügiger Elastizität - gerade unter eine schräge Oberkante 65 eines Sägezahneinschnittes 60 an den je beiden Seitenkanten 63 und 64 der Platten 10 und 11 einschnappt und so gehalten wird.

## Patentansprüche

1. Verfahren zur Sicherung eines Baumballens (1) gegen Kippen beim Einpflanzen des Baumballens (1) in ein umgebendes Erdreich (7), **dadurch gekennzeichnet, dass** ein Verankerungsteil (6) verwendet wird, dessen oberer Bereich (61) von unten in den Baumballen (1) eingesteckt wird und dessen unterer Bereich (62) in das Erdreich (7) eingesteckt wird.

2. Befestigungsmittel zur Sicherung eines Baumballens (1) gegen Kippen mit einem Verankerungsteil (6), das bei Einpflanzung des Baumballens (1) in diesen und in das diesen umgebende Erdreich (7) einsteckbar ist **dadurch gekennzeichnet, dass** ein oberer Bereich (61) des Verankerungsteils (6) von unten in den Baumballen (1) einsteckbar ist und ein unterer Bereich (62) einen Zapfen zur Verankerung im Erdreich (7) bildet, wobei das Verankerungsteil (6) aus zwei im Wesentlichen senkrecht zueinander stehenden und miteinander verbundenen Platten (10, 11) besteht.

3. Befestigungsmittel nach Anspruch 2, **dadurch gekennzeichnet, dass** der obere Bereich (61) nach oben spitz zulaufend und der untere Bereich (62) nach unten spitz zulaufend ausgebildet ist.

4. Befestigungsmittel nach Anspruch 2 oder 3, **dadurch gekennzeichnet, dass** der obere Bereich (61) und der untere Bereich (62) jeweils dreieckförmig ausgebildet sind.

5. Befestigungsmittel nach einem der Ansprüche 2 bis 4, **dadurch gekennzeichnet, dass** die Höhe (h) des oberen Bereichs (61) etwa 1/3 der Gesamthöhe (H) beträgt.

6. Befestigungsmittel nach einem der Ansprüche 2 bis 5, **dadurch gekennzeichnet, dass** die Seitenkanten (63, 64) des oberen Bereichs (61) Sägezahneinschnitte (60) aufweisen.

7. Befestigungsmittel nach Anspruch 6, **dadurch gekennzeichnet, dass** jeweils die Oberkante (65) eines Sägezahneinschnitts (60) einen Winkel (α) gegenüber der Waagerechten aufweist, der ein Herausrutschen eines eingesetzten Ringes (5) eines den Baumballen (1) umgebenden Zusammenhaltemittels (3) verhindert.

8. Befestigungsmittel nach Anspruch 7, **dadurch gekennzeichnet, dass** der Winkel (α) 2° bis 10° beträgt.

9. Befestigungsmittel nach einem der Ansprüche 6 bis 8, **dadurch gekennzeichnet, dass** die vertikale Erstreckung (a) eines Sägezahnabschnitts 0,5 cm bis 2 cm ist.

## Claims

1. A method for securing a tree root ball (1) against tilting during the planting of the tree root ball (1) in a surrounding area of soil (7), **characterized in that** an anchoring part (6) is used, the upper region (61) of which is inserted from below into the tree root ball (1) and the lower region (62) of which is inserted into the soil (7).

2. Fastening means for securing a tree root ball (1) against tilting with an anchoring part (6), which during the planting of the tree root ball (1) can be inserted therein and into the soil (7) surrounding it, **characterized in that** an upper region (61) of the anchoring part (6) can be inserted from below into the tree root ball (1) and a lower region (62) forms a journal for anchoring in the soil (7), wherein the anchoring part (6) is composed of two plates (10, 11) standing essentially perpendicular to one another and connected to one another.

3. The fastening means according to claim 2, **characterized in that** the upper region (61) is embodied tapering upwards and the lower region (62) is embodied tapering downwards.

4. The fastening means according to claim 2 or 3, **characterized in that** the upper region (61) and the lower region (62) are respectively embodied in a triangular- shaped manner.

5. The fastening means according to one of claims 2 through 4, **characterized in that** the height (h) of the upper region (61) is approximately 1/3 of the total height (H).

6. The fastening means according to one of claims 2 through 5, **characterized in that** the side edges (63, 64) of the upper region (61) have sawtooth indentations (60).

7. The fastening means according to claim 6, **characterized in that** in each case the upper edge (65) of a sawtooth indentation (60) has an angle (α) to the horizontal, which prevents an inserted ring (5) of a binding means (3) surrounding the tree root ball (1) from falling out.

8. The fastening means according to claim 7, **characterized in that** the angle (α) is 2° to 10°.

9. The fastening means according to one of claims 6 through 8, **characterized in that** the vertical extension (a) of a sawtooth section is 0.5 cm to 2 cm.

## Revendications

1. Procédé pour empêcher le pain racinaire (1) d'un arbre de basculer lors de la plantation du pain racinaire (1) dans un sol avoisinant (7), **caractérisé en ce que** l'on utilise une pièce d'ancrage (6) dont la zone supérieure (61) est enfoncée par en dessous dans le pain racinaire (1) et dont la zone inférieure (62) est enfoncée dans le sol (7).

2. Moyen de fixation pour empêcher le pain racinaire (1) d'un arbre de basculer, comprenant une pièce d'ancrage (6) qui, lors de la plantation du pain racinaire (1), peut être enfoncée dans ce dernier et dans le sol (7) qui l'entoure, **caractérisé en ce qu'**une zone supérieure (61) de la pièce d'ancrage (6) peut être enfoncée par en dessous dans le pain racinaire (1) et **en ce qu'**une zone inférieure (62) forme une queue d'ancrage dans le sol (7), ladite pièce d'ancrage (6) étant constituée de deux plaques (10, 11) qui sont sensiblement perpendiculaires l'une à l'autre et reliées entre elles.

3. Moyen de fixation selon la revendication 2, **caractérisé en ce que** la zone supérieure (61) est réalisée avec une forme en pointe vers le haut et la zone inférieure (62) avec une forme en pointe vers le bas.

4. Moyen de fixation selon la revendication 2 ou la revendication 3, **caractérisé en ce que** la zone supérieure (61) et la zone inférieure (62) sont réalisées l'une et l'autre avec une forme triangulaire.

5. Moyen de fixation selon l'une des revendications 2 à 4, **caractérisé en ce que** la hauteur (h) de la zone supérieure (61) est approximativement égale à 1/3 de la hauteur totale (H).

6. Moyen de fixation selon l'une des revendications 2 à 5, **caractérisé en ce que** les bords latéraux (63, 64) de la zone supérieure (61) présentent des encoches en dents de scie (60).

7. Moyen de fixation selon la revendication 6, **caractérisé en ce que** le bord supérieur (65) de chaque encoche en dent de scie (60) fait avec l'horizontale un angle (α) qui empêche le glissement d'un anneau (5) d'un moyen de retenue (3) entourant le pain racinaire (1).

8. Moyen de fixation selon la revendication 7, **caractérisé en ce que** l'angle (α) a une valeur de 2° à 10°.

9. Moyen de fixation selon l'une des revendications 6 à 8, **caractérisé en ce que** l'extension verticale (a) d'un segment en dent de scie mesure de 0,5 cm à 2 cm.
